# EUROPÄISCHE PATENTSCHRIFT

(11) **EP 2 634 886 B1**
(45) Veröffentlichungstag und Bekanntmachung des Hinweises auf die Patenterteilung: **25.07.2018**
(21) Anmeldenummer: 12194584.4
(22) Anmeldetag: 28.11.2012
(51) Int. Cl.: H02J 3/18, H02J 3/14

(54) **Blindleistungskompensation**
Reactive power compensation
Compensation d'énergie réactive

(30) Priorität: 29.02.2012 DE 102012203125
(43) Veröffentlichungstag der Anmeldung: 04.09.2013
(73) Patentinhaber: Siemens Aktiengesellschaft, 80333 München (DE)
(72) Erfinder: Benz, Georg, 90556 Cadolzburg (DE)

(56) Entgegenhaltungen:
- CN-A- 101 309 010
- CN-A- 101 938 130
- US-A1- 2010 327 823
- "IEEE Guide for Specification of High-Voltage Direct-Current Systems. Part I - Steady-State Performance;ANSI/IEEE Std 1030-1987", IEEE STANDARD, IEEE, PISCATAWAY, NJ, USA, 1. Januar 1988 (1988-01-01), Seite _1, XP017602230, ISBN: 978-0-7381-4137-4

## Beschreibung

Die vorliegende Erfindung betrifft ein Verfahren zur Blindleistungskompensation eines elektrischen Versorgungsnetzes mittels mindestens eines Kondensators.

Anlagen zur EMV-Filterung und Blindleistungskompensation mit Kondensatoren sind beispielsweise aus der XP017602230 und CN101309010 bekannt.

Elektrische Versorgungsnetze werden hauptsächlich durch induktive Verbraucher belastet. Zur Spannungshaltung ist in solchen induktiv belasteten Versorgungsnetzen eine Blindleistungskompensation erforderlich. Diese kann dem veränderlichen Blindleistungsverbrauch durch Zu- und Abschaltung von Kondensatoren gestuft angepasst werden.

Werden zu den Kondensatoren Drosseln parallel geschaltet, deren Blindleistungsverbrauch durch Halbleiterbauelemente gesteuert veränderbar ist, lässt sich die kapazitive Leistung stufenlos regeln und auf diese Weise auch der Spannungspegel des Versorgungsnetzes entsprechend genau einstellen.

Der Erfindung liegt die Aufgabe zugrunde, ein Verfahren der oben genannten Art vorzuschlagen, das eine kostengünstige und aufwandsarme Blindleistungskompensation ermöglicht.

Die Aufgabe wird durch das Verfahren mit den Merkmalen nach Anspruch 1 gelöst. Dabei werden der bzw. die Kondensatoren, die zur EMV Entstörung und/oder Filterung in einem Gerät bei dessen Betrieb genutzt werden, im Stand-by-Betrieb des Geräts oder während das Gerät von dem Versorgungsnetz abgeschaltet ist durch Zuschaltung an das Versorgungsnetz zur Blindleistungskompensation verwendet.

Ein Ausführungsbeispiel der Erfindung wird nachfolgend anhand einer Zeichnung näher erläutert. Es zeigen:
- FIG 1: ein elektrisches Gerät mit einem Entstörkondensator nach dem Stand der Technik und
- FIG 2: ein erfindungsgemäßes elektrisches Gerät mit einem an das Versorgungsnetz zuschaltbaren Entstörkondensator.

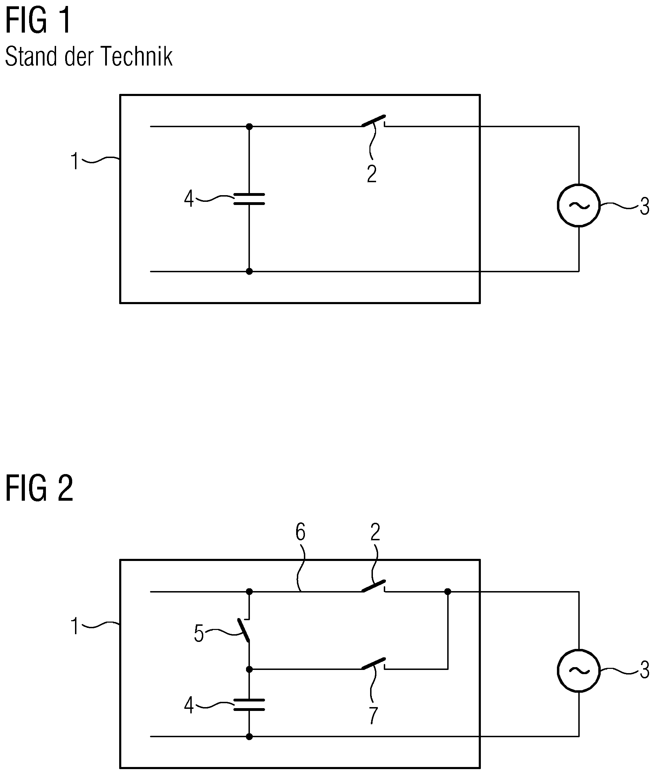

In FIG 1 ist ein elektrisches Gerät 1 nach dem Stand der Technik vereinfacht dargestellt, das über ein Schaltelement 2 an das Versorgungsnetz 3 anschließbar oder von diesem trennbar ist. Parallel zum Netzanschluss des Geräts 1 ist ein Entstörkondensator 4 geschaltet. Mit dem Schaltelement 2 ist das Ein- und Ausschalten und ggf. der Übergang in den Stand-by-Betrieb des Geräts 1 möglich. Anstelle des Entstörkondensators 4 oder zusätzlich zu diesem können weitere Kondensatoren 4 vorhanden sein, die im Betrieb des Geräts 1 zur Entstörung und/oder Filterung dienen.

FIG 2 zeigt ausgehend von FIG 1 die erfindungsgemäße Ausführung, bei der ein erster Schalter 5 vorgesehen ist, mit dem die Verbindung des Entstörkondensators 4 zur Einspeiseleitung 6 getrennt werden kann. Über einen weiteren Schalter 7 kann der Entstörkondensator 4 an das Versorgungsnetz 3 zugeschaltet werden, um im Stand-by-Betrieb des Geräts 1 oder während das Gerät vom Versorgungsnetz abgeschaltet ist die Funktion der Blindleistungskompensation des Versorgungsnetzes 3 zu übernehmen. Der oder die Kondensatoren 4 des Geräts 1 können durch ein Fernsteuersignal gesteuert an das Versorgungsnetz 3 zugeschaltet und von diesem abgeschaltet werden.

## Patentansprüche

1. Verfahren zur Blindleistungskompensation eines elektrischen Versorgungsnetzes (3) mittels mindestens eines Kondensators (4), wobei der bzw. die Kondensatoren (4) zur EMV Entstörung und/oder Filterung in einem elektrischen Gerät (1) bei dessen Betrieb genutzt werden, **dadurch gekennzeichnet, dass** der bzw. die Kondensatoren (4) des Geräts (1), im Stand-by-Betrieb des Geräts (1) oder während das Gerät (1) von dem Versorgungsnetz (3) mittels eines Schaltelements (2) getrennt ist, über ein weiteres Schaltelement (7) an das Versorgungsnetz (3) zugeschaltet und zur Blindleistungskompensation verwendet werden.

2. Verfahren nach Anspruch 1, ***dadurch gekennzeichnet, dass*** der oder die Kondensatoren (4) des Geräts (1) durch ein Fernsteuersignal gesteuert an das Versorgungsnetz (3) zuschaltbar und von diesem abschaltbar sind.

## Claims

1. Method for reactive power compensation of an electrical supply network (3) by means of at least one capacitor (4), wherein the capacitor or capacitors (4) are used for EMC suppression and/or filtering in an electrical device (1) while the latter is in operation, **characterised in that** the capacitor or capacitors (4) of the device (1) are connected to the supply network (3), in standby operation of the device (1) or while the device (1) is disconnected from the supply network (3) by means of a switching element (2), via a further switching element (7) and are used for reactive power compensation.

2. Method according to claim 1, **characterised in that** the capacitor or capacitors (4) of the device (1) can be connected to the supply network (3) and disconnected from it under the control of a remote-control signal.

## Revendications

1. Procédé destiné à la compensation de puissance réactive d'un réseau d'alimentation électrique (3) au moyen d'au moins un condensateur (4), dans lequel le ou les condensateurs (4) sont utilisés en vue d'un antiparasitage CEM et/ou d'un filtrage dans un appareil électrique (1) lors de la mise en service de celui-ci, **caractérisé en ce que** le ou les condensateurs (4) de l'appareil (1), en mode veille de l'appareil (1) ou pendant que l'appareil (1) est séparé du réseau d'alimentation (3) au moyen d'un élément de commutation (2), est mis sous tension sur le réseau d'alimentation (3) par le biais d'un autre élément de commutation (7) et est employé en vue d'une compensation de puissance réactive.

2. Procédé selon la revendication 1, **caractérisé en ce que** le ou les condensateurs (4) de l'appareil (1) peuvent, commandés par le biais d'un signal de commande à distance, être connectés au et déconnectés du réseau d'alimentation (3).
